# EUROPEAN PATENT APPLICATION

(11) **EP 4 364 879 A1**
(43) Date of publication of application: **08.05.2024**
(21) Application number: 22841786.1
(22) Date of filing: 17.05.2022
(51) Int. Cl.: B23K 11/12, B23K 11/11, B23K 11/16

(54) **RESISTANCE SPOT WELDING METHOD AND METHOD FOR MANUFACTURING WELDED JOINT**

(30) Priority: 14.07.2021 JP 2021116765
(71) Applicant: JFE Steel Corporation, Tokyo 100-0011 (JP)
(72) Inventor: MAEDA, Satoshi, Tokyo 100-0011 (JP); ENDOH, Kazuki, Tokyo 100-0011 (JP); TOJI, Yuki, Tokyo 100-0011 (JP); KAWABE, Nao, Tokyo 100-0011 (JP)
(74) Representative: Haseltine Lake Kempner LLP
(86) International application number: PCT/JP2022/020573
(87) International publication number: WO 2023/286439

(57) **Abstract**

Provided is a resistance spot welding method suitable for manufacturing a welded joint exhibiting excellent delayed fracture resistance. The resistance spot welding method includes sandwiching two or more overlapped steel sheets between a pair of welding electrodes, applying current to the steel sheets while pressing the steel sheets, forming a nugget on overlapping surfaces of the steel sheets to join the steel sheets, and after the joining, applying vibration directly or indirectly to the nugget so that the steel sheets are caused to vibrate at a frequency of 100 Hz or more and a maximum amplitude of 10 nm to 500 µm.

## Description

### TECHNICAL FIELD

This disclosure relates to a resistance spot welding method suitable for manufacturing a welded joint that exhibits excellent delayed fracture resistance, and a method of manufacturing a welded joint using the resistance spot welding method. This disclosure is particularly suitable for resistance spot welding of high strength steel sheets. Further, this disclosure is particularly suitable for use in the manufacturing process of automotive parts for automobiles and the like and in the assembly process of automotive bodies.

### BACKGROUND

Resistance spot welding is widely used for the processing of the appearance of vehicles such as automobiles because the appearance is good after the welding. Resistance spot welding is one of the techniques to join metals by applying pressure to the metals. Specifically, resistance spot welding is a technique of joining metals by applying electrodes from both sides of two or more metals (e.g., steel sheets) to be joined, gradually melting the metals by current while applying moderate pressure, and then cooling the metals to solidify the melted portion. A heat-affected zone (HAZ), which is formed at and around a portion where metals are joined and which is melted by joining, is called a nugget. Further, a portion joined via a nugget is called a welded joint.

In resistance spot welding, a high tensile stress remains in the nugget portion during the melting and solidifying process of the metal. In addition, during the melting and solidifying process in the welding, antirust oil, moisture, coating, surface treatment agent, and the like present on the surface of the steel sheet are incorporated into the metal, causing formation or penetration of hydrogen. The hydrogen tends to accumulate in areas of tensile stress, resulting in the problem of occurrence of delayed fracture in the welded joint after the welding and cooling of the metal, due to residual stress and hydrogen in the nugget.

Delayed fracture is a phenomenon in which the metal suddenly fractures after a period of time has elapsed since the welding or other processing, even though the stress applied to the metal is below its yield stress.

On the other hand, high strength steel sheets are sometimes used as steel sheets for automobiles and other vehicles to improve the crashworthiness by strengthening the automotive body. In general, a high strength steel sheet is a steel sheet to which not only a large amount of C but also various alloying elements are added to increase the strength, but it has susceptibility to hydrogen embrittlement. Therefore, the delayed fracture described above is a particularly serious problem in resistance spot welding of high strength steel sheets.

In response to this delayed fracture problem, JP 6194765 B (PTL 1) proposes a technique of applying welding current at a certain electrode force, then applying subsequent-current at an electrode force higher than the certain electrode force, and further holding the electrodes, to reduce tensile residual stress in a welded portion and improve delayed fracture resistance. In addition, PTL 1 describes that, after holding the electrodes, further performing "heat treatment after welding" at 120 °C to 220 °C for 100 seconds to 6000 seconds reduces the amount of hydrogen that has penetrated into the welded portion, which is advantageous in preventing delayed fracture.

### CITATION LIST

### Patent Literature

PTL 1: JP 6194765 B

### SUMMARY

### (Technical Problem)

However, the technique of PTL 1 focuses solely on reducing tensile residual stress by optimizing the electrode force and current pattern to prevent delayed fracture, and there is room for further improvement in hydrogen embrittlement of a steel sheet. With regard to the hydrogen embrittlement, the technique of PTL 1 has a problem that, because the welded portion cools rapidly during the non-current cooling time provided between the welding current and the subsequent-current, a large amount of hydrogen remains without diffusing to the outside of the nugget, which increases the amount of residual hydrogen inside the nugget. As a result, there is a concern that it is difficult to suppress delayed fracture caused by the residual hydrogen. Even if the "heat treatment after welding" described in PTL 1 is performed for the residual hydrogen, there are further concerns that the costs are inevitably increased due to the heat treatment equipment, and that the material properties are changed due to changes in the microstructure of the steel sheet caused by the heat treatment.

Therefore, it is necessary to develop a technique that can better control the hydrogen remaining in a nugget during resistance spot welding, to obtain a welded joint that exhibits better delayed fracture resistance.

To solve the above problems, it could be helpful to provide a resistance spot welding method and a method of manufacturing a welded joint, with which a welded joint that exhibits excellent delayed fracture resistance can be obtained by improving hydrogen embrittlement properties.

### (Solution to Problem)

To solve the above problems, we have diligently studied methods to improve the delayed fracture resistance of an obtained welded joint by releasing hydrogen that has been formed in a nugget or that has penetrated into a nugget during resistance spot welding to the outside of a steel sheet. As a result, we newly found that microvibrating joined steel sheets at a relatively high frequency and amplitude sufficiently and efficiently reduces hydrogen in the steel sheets, and is thus effective in improving the delayed fracture resistance of a welded joint without changes in material properties due to microstructural changes caused by heat treatment.

We have found that a welded joint that exhibits excellent delayed fracture resistance can be easily obtained by applying vibration to a steel sheet, on which a nugget has been formed, at a predetermined frequency and maximum amplitude in resistance spot welding.

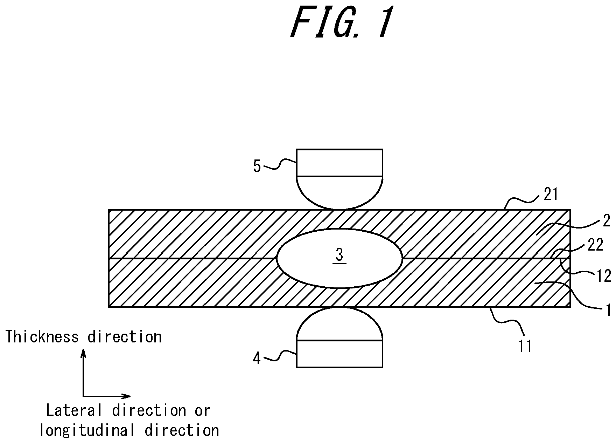

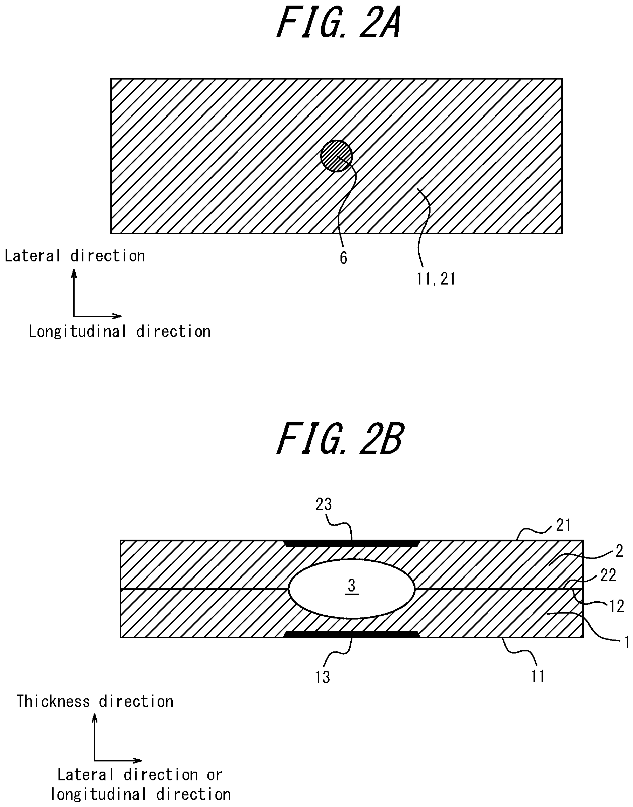

The present disclosure is based on the above findings. We thus provide the following.
1. A resistance spot welding method comprising:
   sandwiching two or more overlapped steel sheets between a pair of welding electrodes,
   applying current to the steel sheets while pressing the steel sheets,
   forming a nugget on overlapping surfaces of the steel sheets to join the steel sheets, and
   after the joining, applying vibration directly or indirectly to the nugget so that the steel sheets are caused to vibrate at a frequency of 100 Hz or more and a maximum amplitude of 10 nm to 500 µm.
   In this specification, the "nugget" is usually formed on the side of the overlapping surfaces of the steel sheets (see reference signs 12 and 22 in FIGS. 1 and 2B) and cannot be directly confirmed from the surface of the steel sheet after resistance spot welding (see reference signs 11 and 21 in FIGS. 2A and 2B). However, it can be confirmed that a "nugget" (see reference sign 3 in FIGS. 1 and 2B) has been formed from a welding trace (see reference sign 6 in FIG. 2A) caused on the surface of the steel sheet by the welding. Further, the "frequency" and "maximum amplitude" at which the steel sheet is caused to vibrate refer to the frequency and maximum amplitude at the nugget 3 in the case where the nugget 3 is visible, or at a portion of the surface 11 or 21 of the steel sheet where the welding trace 6 is visible (hereinafter also referred to as a "nugget-equivalent surface") in the case where the nugget 3 is not visible. The frequency and maximum amplitude can be measured, for example, according to the methods described below. Even when the nugget is not visible, the distance between the nugget and each nugget-equivalent surface is usually so close that there is practically no difference in the frequency and maximum amplitude at the corresponding positions. Then, "applying vibration directly to the nugget" can be achieved, for example, when the nugget is exposed on the surface of the steel sheet, by using a vibration application device 8 described below so that a vibration element 82 directly contacts the nugget and applies vibration thereto. In addition, "applying vibration indirectly to the nugget" can be achieved, for example, when the nugget is not exposed on the surface of the steel sheet, by using a vibration application device 7 or 8 described below so that an electromagnet 73 or vibration element 82 applies vibration to the nugget-equivalent surfaces 13 and 23.
2. The resistance spot welding method according to 1., wherein time from the start of the applying of the current to the start of the applying of the vibration is 360 minutes or less.
3. The resistance spot welding method according to 1. or 2., wherein time for the applying of the vibration is 1 second or longer.
4. The resistance spot welding method according to any one of 1. to 3., wherein at least one of the steel sheets has a tensile strength of 780 MPa or more.
5. The resistance spot welding method according to any one of 1. to 4., wherein at least one of the steel sheets has a coating on at least one of a surface or the overlapping surface thereof.
6. The resistance spot welding method according to 5., wherein the coating is a hot-dip galvanized coating or a galvannealed coating.
7. The resistance spot welding method according to any one of 1. to 6., wherein the applying of the vibration is performed by causing the steel sheets to vibrate in response to an external force exerted by an electromagnet onto the steel sheets, the electromagnet having a magnetic pole surface spaced from and facing a surface of at least one of the steel sheets (i.e., by a non-contact method, or a non-contact electromagnetic scheme).
8. The resistance spot welding method according to any one of 1. to 6., wherein the applying of the vibration is performed by causing the steel sheets to be vibrated by a vibration element configured to contact at least one of the steel sheets (that is, by a contact method, or a contact vibration element scheme).
9. A method of manufacturing a welded joint, the method comprising:
   sandwiching two or more overlapped steel sheets between a pair of welding electrodes,
   applying current to the steel sheets while pressing the steel sheets,
   forming a nugget on overlapping surfaces of the steel sheets to obtain a welded joint in which the steel sheets are joined, and
   after the joining, applying vibration directly or indirectly to the nugget so that the steel sheets are caused to vibrate at a frequency of 100 Hz or more and a maximum amplitude of 10 nm to 500 µm.
10. The method of manufacturing a welded joint according to 9., wherein time from the start of the applying of the current to the start of the applying of the vibration is 360 minutes or less.
11. The method of manufacturing a welded joint according to 9. or 10., wherein time for the applying of the vibration is 1 second or longer.
12. The method of manufacturing a welded joint according to any one of 9. to 11., wherein at least one of the steel sheets has a tensile strength of 780 MPa or more.
13. The method of manufacturing a welded joint according to any one of 9. to 12., wherein at least one of the steel sheets has a coating on at least one of a surface or the overlapping surface thereof.
14. The method of manufacturing a welded joint according to 13., wherein the coating is a hot-dip galvanized coating or a galvannealed coating.
15. The method of manufacturing a welded joint according to any one of 9. to 14., wherein the applying of the vibration is performed by causing the steel sheets to vibrate in response to an external force exerted by an electromagnet onto the steel sheets, the electromagnet having a magnetic pole surface spaced from and facing a surface of at least one of the steel sheets (that is, by a non-contact method, or a non-contact electromagnetic scheme).
16. The method of manufacturing a welded joint according to any one of 9. to 14., wherein the applying of the vibration is performed by causing the steel sheets to be vibrated by a vibration element configured to contact at least one of the steel sheets (that is, by a contact method, or a contact vibration element scheme).

### (Advantageous Effect)

According to the resistance spot welding method of the present disclosure, even when steel sheets are joined, the problem of delayed fracture can be satisfactorily avoided without changes in the material properties of the steel sheet due to microstructural changes caused by heat treatment. According to the method of manufacturing a welded joint of the present disclosure, it is possible to easily obtain a welded joint that exhibits excellent delayed fracture resistance.

### BRIEF DESCRIPTION OF THE DRAWINGS

In the accompanying drawings:
FIG. 1 schematically illustrates forming a nugget to join steel sheets according to one embodiment of the present disclosure;
FIG. 2A is a plan view of steel sheets after joining according to one embodiment of the present disclosure from one surface side;
FIG. 2B is a cross-sectional view of steel sheets after joining according to one embodiment of the present disclosure from one side surface side;
FIG. 3 is a schematic diagram of a vibration application device 7 used in one embodiment of the present disclosure;
FIG. 4A is a schematic diagram illustrating an example of installation of electromagnets 73 of the vibration application device 7 relative to steel sheets after joining in each embodiment of the present disclosure;
FIG. 4B is a schematic diagram illustrating another example of installation of electromagnets 73 of the vibration application device 7 relative to steel sheets after joining in each embodiment of the present disclosure;
FIG. 5A schematically illustrates how the magnetic field is generated from an electromagnet 73 in each embodiment of the present disclosure;
FIG. 5B schematically illustrates how the magnetic field is generated from an electromagnet 73 in each embodiment of the present disclosure;
FIG. 6 is a schematic diagram illustrating the configuration of a vibration application device 8 used in another embodiment of the present disclosure; and
FIG. 7 is a schematic diagram illustrating an example of installation of the vibration application device 8 relative to steel sheets after joining.

### DETAILED DESCRIPTION

The following specifically describes embodiments of the present disclosure with reference to the drawings.

With reference to FIGS. 1 and 2, in the resistance spot welding method of the present disclosure, two or more overlapped steel sheets, such as steel sheets 1 and 2, are sandwiched between a pair of welding electrodes 4 and 5, current is applied to the steel sheets while pressing the steel sheets, a nugget 3 is formed on the side of the overlapping surfaces (overlapping portions) 12 and 22 of the steel sheets to join the steel sheets.

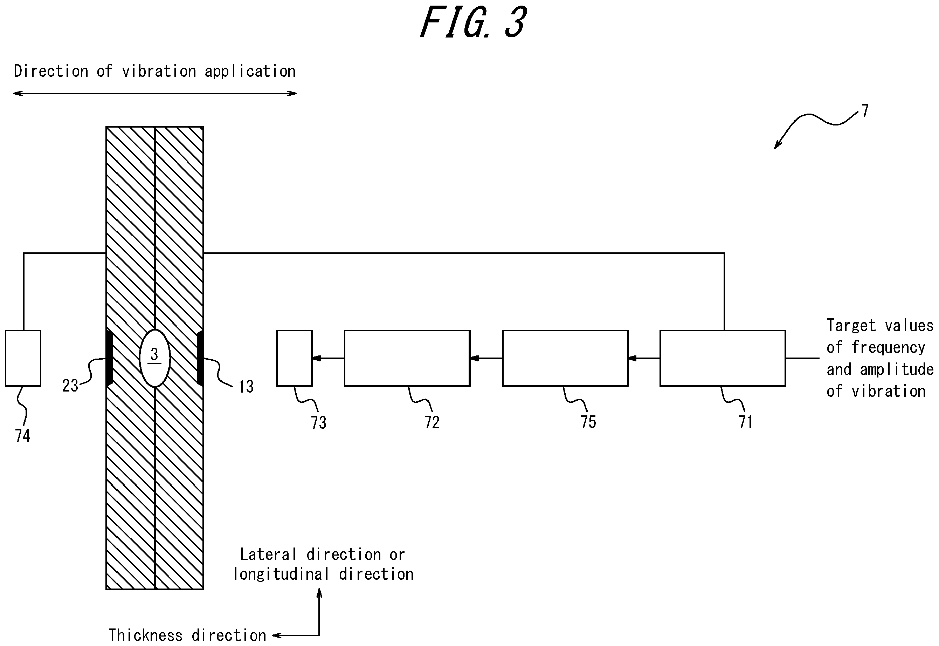

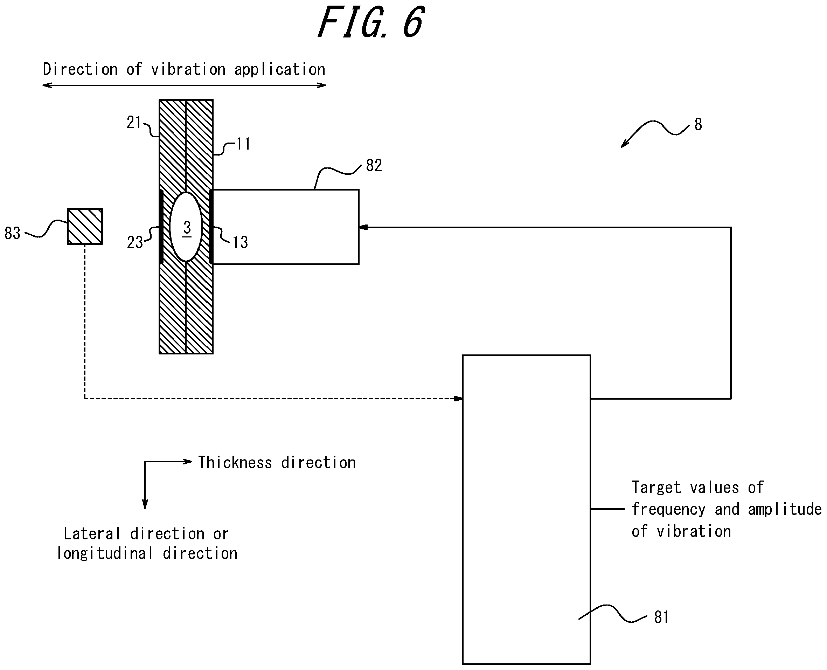

Then, with reference to FIGS. 3-7, after joining, vibration that produces a predetermined frequency and maximum amplitude is applied to the nugget 3 (e.g., to those portions of the steel sheets including at least part, preferably all, of the nugget-equivalent surfaces 13 and 23, along the "vibration application direction" parallel to the direction of displacement of amplitude caused in the steel sheets by the vibration, indicated by arrows in FIGS. 3 and 6).

According to the resistance spot welding method of the present disclosure, the problem of delayed fracture of the spot-welded portion can be avoided in a good and simple manner, without any change in material properties due to microstructural changes caused by heat treatment, by efficiently releasing hydrogen that accumulates mainly in the nugget to the outside of the steel sheet.

The method of manufacturing a welded joint of the present disclosure also has the same features as the resistance spot welding method of the present disclosure described above. According to the method of manufacturing a welded joint of the present disclosure, a welded joint having excellent delayed fracture resistance can be easily obtained.

Although the reasons why the delayed fracture resistance of the steel sheets can be improved by applying predetermined vibration to the joined steel sheets are not clear, we speculate as follows.

By applying vibration to a nugget formed in joining under predetermined conditions, a steel sheet portion including the nugget is forcibly vibrated. Due to bending deformation caused by this forced vibration, the lattice spacing of the steel sheet portion including the nugget repeats expansion (tension) and contraction (compression) in the thickness direction. Hydrogen in the steel where the lattice spacing is expanded is induced to diffuse to the tensile side where the potential energy is lower, so that the expansion and contraction of the lattice spacing promotes the diffusion of hydrogen, and a hydrogen diffusion path connecting the inside and the surface of the steel sheet is forcibly formed. Hydrogen, for which a diffusion path has been intentionally formed, escapes through the surface to the outside of the steel sheet, where it is more energetically advantageous, at the time when the lattice spacing in the vicinity of the steel sheet surface is expanded. Thus, it is speculated that the application of vibration to the joined steel sheets under the predetermined conditions sufficiently and efficiently reduces the hydrogen that accumulates in the steel, especially in the nugget that is the area of tensile residual stress, thereby suppressing delayed fracture of a welded joint in a good and simple manner.

The following describes the resistance spot welding method of the present disclosure in detail according to several embodiments, but the resistance spot welding method of the present disclosure is not limited to these embodiments. Further, the method of manufacturing a welded joint of the present disclosure has the same features as those detailed for the resistance spot welding method of the present disclosure, and the method of manufacturing a welded joint of the present disclosure is not limited to the embodiments described below.

### [Joining steel sheets]

The resistance spot welding method of the present disclosure allows hydrogen to escape efficiently from the nugget after joining the steel sheets. Therefore, the processes up to joining a plurality of steel sheets are not particularly limited and may be performed under general conditions for resistance spot welding. General current conditions for resistance spot welding include, for example, a current of 1 kA to 15 kA, a current time of 100 ms to 2000 ms, and an electrode force of 0.5 kN to 10 kN.

In one embodiment of the present disclosure illustrated in FIGS. 1 and 2, a pair of welding electrodes 4 and 5 are pressed against the surfaces 11 and 21 of two overlapped steel sheets 1 and 2 and current is applied. At this time, the portions of the overlapping surfaces 12 and 22 of the steel sheets on which current is applied are once melt due to resistance heating and then solidified to form a nugget 3. Thus, in the resistance spot welding method, the steel sheets 1 and 2 are joined via the solid nugget 3. This nugget 3 usually does not appear directly on the surfaces 11 and 21 of the joined steel sheets. However, on the surfaces 11 and 21 of the steel sheets, burn traces and/or dent welding traces are formed as resistance spot welding points 6 at the locations where the welding electrodes 4 and 5 are pressed. Therefore, it can be confirmed that the nugget 3 exists inside the thickness direction of the resistance spot welding point 6, and the resistance spot welding point 6 can be treated as a "nugget-equivalent surface" described in detail below.

### [[Properties of steel sheet]]

The steel sheet used in the resistance spot welding method of the present disclosure is not particularly limited, but it is preferably a high strength steel sheet. Specifically, the tensile strength of at least one of the steel sheets to be joined is preferably 780 MPa or more. The tensile strength is more preferably 1000 MPa or more. The tensile strength is still more preferably 1300 MPa or more. It is further preferably that all of the steel sheets to be joined have the tensile strength described above. When the tensile strength of the steel sheet to be joined is less than 780 MPa, the degree of tensile residual stress caused in the nugget by resistance spot welding is small. In this case, delayed fracture hardly occurs in a resulting welded joint. On the other hand, as the strength of the steel sheet to be joined increases as described above, hydrogen is more likely to be formed in the nugget or to penetrate into the nugget due to resistance spot welding, and delayed fracture is more likely to occur in the welded joint. Therefore, the effect of improving the delayed fracture resistance of the welded joint by application of vibration is improved. Although the tensile strength of the steel sheet is not particularly limited, it may be 3000 MPa or less.

The chemical composition of the steel sheet is not particularly limited, but it is preferable that the chemical composition be such that the steel sheet can be a high strength steel sheet as described above. Preferred examples of the high strength steel sheet chemical composition include a steel sheet having a C content of 0.05 mass% or more and 0.50 mass% or less.

### [[Surface treatment of steel sheet]]

In the resistance spot welding method of the present disclosure, any surface treatment such as coating can be performed for the purpose of imparting desired properties to the steel sheet. Surface treatment may be performed before or after the vibration application process. If surface treatment is performed before the vibration application process, it is preferable that the subsequent vibration application be performed by a non-contact method that does not involve contact between the vibration source and the steel sheets, in order not to impair the effect of the surface treatment.

The coating may be formed by any of organic coating, inorganic coating, and metal coating, and the coating may be performed according to known techniques. Above all, from the viewpoint of preventing rust and corrosion, the coating is preferably a hot-dip galvanized (GI) coating or a galvannealed (GA) coating.

### [Application of vibration]

Next, in the resistance spot welding method of the present disclosure, vibration is applied intentionally and either directly or indirectly to the nugget after the steel sheets are joined as described above. During the application of vibration, it is important the steel sheets are caused to microvibrate at a frequency of 100 Hz or higher and a maximum amplitude of 10 nm to 500 µm. By controlling the frequency and the maximum amplitude as described above, hydrogen can be efficiently released from the nugget, and delayed fracture of the welded joint due to hydrogen embrittlement can be reduced in a good and simple manner without changes in material properties due to microstructural changes caused by heat treatment.

The vibration that produces the predetermined frequency and maximum amplitude can be provided using any vibration application device capable of applying vibration to the steel plates, either in contact with the steel sheets or without contact therewith.

### [[Frequency]]

From the viewpoint of promoting hydrogen diffusion, it is important that the steel sheets be caused to vibrate at a frequency of 100 Hz or more. If the frequency is less than 100 Hz, the diffusion of hydrogen to the outside of the steel sheets is not promoted, the amount of hydrogen in the nugget is not sufficiently reduced, and the effect of desorbing hydrogen contained in the nugget is not sufficient. As the frequency increases, the bending deformation on the steel sheets becomes large. As a result, a better diffusion path for hydrogen is formed in the steel, and delayed fracture caused by hydrogen embrittlement can be further suppressed. Therefore, the frequency at which the steel sheets are caused to vibrate should be 100 Hz or higher, and is preferably 500 Hz or higher, and more preferably 3,000 Hz or higher. The applied vibration may be a vibration with damping, in which case, as long as the steel sheets are caused to vibrate at a frequency of 100 Hz or higher, it is acceptable to include a timing in which the frequency drops below 100 Hz. In the case of applying vibration to the steel sheets multiple times, the frequency should be 100 Hz or higher at at least one time of application of vibration, and is preferably 100 Hz or higher in all times of application of vibration.

When resistance spot welding is performed multiple times on the same steel sheets, the impact during welding may cause the already generated nugget to vibrate. However, in these cases, the frequency of vibration of the steel sheets is at most about 50 Hz to 60 Hz, and the effect of desorbing the hydrogen contained in the nugget cannot be obtained.

On the other hand, if the frequency of vibration of the steel sheets is excessively high, sufficient time to expand the lattice spacing in the steel sheets cannot be ensured, and the effect of desorbing hydrogen may be difficult to obtain. From this perspective, it is important to keep the frequency of vibration of the steel sheets at or below 100,000 Hz (100 kHz), preferably at or below 80 kHz, and more preferably at or below 50 kHz. In the case of applying vibration to the steel sheets multiple times, it is preferable that the frequency be at or below the above-mentioned preferable upper limits at at least one time of application of vibration, and it is particularly preferable that the frequency be at or below the above-mentioned preferable upper limits in all times.

The frequency at which the steel sheets are caused to vibrate can be measured by a vibration detector 74 illustrated in FIG. 3 or a vibration detector 83 illustrated in FIG. 6. In addition, the frequency can be adjusted by controlling the frequency of the pulsed direct current or continuous alternating current in the case of a vibration application device 7 illustrated in FIG. 3, or by controlling the frequency of a vibration element 82 in the case of a vibration application device 8 illustrated in FIG. 6.

### [[Maximum Amplitude]]

If the maximum amplitude of the steel sheets is less than 10 nm, the lattice spacing is not sufficiently expanded on the surfaces of the steel sheets, hydrogen diffusion is not sufficiently promoted, and the effect of desorbing hydrogen contained in the nugget is not sufficient. Therefore, it is important that the maximum amplitude of the steel sheets be 10 nm or more. The maximum amplitude is preferably 100 nm or more, and more preferably 500 nm or more. If the maximum amplitude of the steel sheets is more than 500 µm, the strain along the thickness direction of the steel sheets increases and plastic deformation occurs, which ends up trapping hydrogen. Accordingly, the effect of desorbing the hydrogen contained in the nugget cannot be fully achieved. From this perspective, it is important that the maximum amplitude of the steel sheets be 500 µm or less. The maximum amplitude is preferably 400 µm or less, more preferably 300 µm or less, even more preferably 50 µm or less, and particularly preferably 5 µm or less. The applied vibration may be a vibration with damping, in which case, as long as the steel sheets are caused to vibrate at a maximum amplitude of 10 nm or more and 500 µm or less, it is acceptable to include a timing in which the amplitude decreases to less than 10 nm. In the case of applying vibration to the steel sheets multiple times, the maximum amplitude should be 10 nm or more and 500 µm or less at at least one time of application of vibration, and is preferably 10 nm or more and 500 µm or less in all times of application of vibration.

The maximum amplitude of the steel sheets can be measured by the vibration detector 74 illustrated in FIG. 3 or the vibration detector 83 illustrated in FIG. 6. In addition, the maximum amplitude can be adjusted by controlling the amount of current flowing through the electromagnet 73 in the case of the vibration application device 7 illustrated in FIG. 3, or by controlling the amplitude of the vibration element 82 in the case of the vibration application device 8 illustrated in FIG. 6.

### [[Vibration application time]]

From the viewpoint of sufficiently reducing hydrogen from the nugget, the time to apply vibration is preferably 1 second or longer, more preferably 5 seconds or longer, and still more preferably 10 seconds or longer. On the other hand, from the viewpoint of not hindering productivity, the time to apply vibration is preferably shorter than 3,600 seconds, more preferably 1,800 seconds or shorter, and still more preferably 1,500 seconds or shorter.

As used herein, "time to apply vibration" means the time during which vibration is applied directly or indirectly to the nugget, or in the case of applying vibration to the nugget multiple times, it means the total time. The "time to apply vibration" can be checked, for example, by measuring the frequency and maximum amplitude at a certain nugget-equivalent surface using the vibration detector 74 illustrated in FIG. 3 or the vibration detector 83 in FIG. 6, as the total time during which the frequency and maximum amplitude are within the predetermined ranges described above.

### [[Time from start of current passage to start of vibration application]]

Delayed fracture due to resistance spot welding using welding electrodes may occur between 180 minutes and 720 minutes, with the start of current passage being 0 seconds. It is preferable to apply vibration before such delayed fracture occurs to more reliably suppress or eliminate the accumulation of hydrogen in the nugget, which is areas of tensile residual stress in the steel sheets. From this point of view, it is preferable to apply vibration to the nugget within 360 minutes from the start of current passage to the steel sheets. It is more preferably shorter than 180 minutes, and still more preferably within 60 minutes. From the viewpoint of avoiding the risk of delayed fracture as much as possible, the time from the start of current passage to the start of vibration application is desirably as short as possible. Therefore, the lower limit of the time from the start of current passage to the start of vibration application is not particularly limited. However, considering the time required for the current passage itself, the lower limit of the above time is usually 10 seconds.

### [[Amount of residual hydrogen in nugget]]

After the resistance spot welding according to the present disclosure, the amount of residual hydrogen in the nugget is preferably 0.50 ppm or less in mass fraction, and more preferably 0.30 ppm or less in mass fraction. Of course, it may be 0 ppm in mass fraction. Because residual hydrogen in the nugget causes hydrogen embrittlement in a welded joint, the amount of residual hydrogen is desirably as low as possible. In general, resistance spot welding to a steel sheet with high strength is more likely to cause delayed fracture. However, in the present disclosure, vibration is applied to the nugget under predetermined conditions, so that the amount of residual hydrogen can be reduced satisfactorily even in the case of high strength steel sheets.

In the nugget after subjection to the resistance spot welding according to the present disclosure, the percentage of hydrogen reduction after the application of vibration relative to before the application of vibration is preferably over 50 %, more preferably 60 % or more, even more preferably 70 % or more, and particularly preferably 80 % or more.

The vibration application may be performed by a non-contact method that does not involve contact with the steel sheets, or by a contact method that involves contact with the steel sheets. From the viewpoint of suppressing physical effects such as deformation of the steel sheets or damage to the coating, the non-contact method is preferred.

### [[Vibration application device]]

Each embodiment of the present disclosure can be carried out by installing, in an appropriate position in a resistance spot welding line, any non-contact-type vibration application device as exemplified by the vibration application device 7 illustrated in FIG. 3, or any contact-type vibration application device as exemplified by the vibration application device 8 illustrated in FIG. 6.

### Non-contact-type vibration application device 7

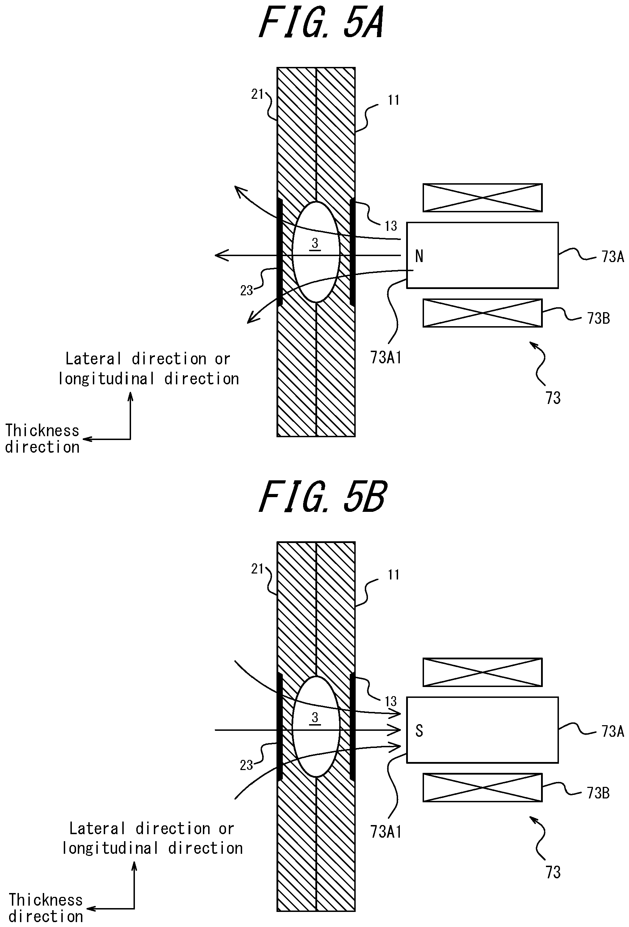

With reference to FIG. 3, the vibration application device 7 includes a controller 71, an amplifier 72, an electromagnet 73, a vibration detector 74, and a power supply 75. With reference to FIGS. 5A and 5B, the vibration application device 7 has an electromagnet 73 that includes a magnet 73A and a coil 73B wound around the magnet 73A. The electromagnet 73 has a magnetic pole surface 73A1 that is spaced from and facing a surface of the steel sheets. The vibration application device 7 is configured to cause the steel sheets to vibrate in response to an external force exerted by the electromagnet 73 onto the steel sheets.

The shape and installation of the electromagnet 73 is not limited as long as the electromagnet 73 has a magnetic pole surface 73A1 that is spaced from and facing a surface of the steel sheets. As illustrated in FIGS. 5A and 5B, this setup makes the direction of the magnetic field lines perpendicular to the surface of the steel sheets and enables an attractive force to be applied to the steel sheets.

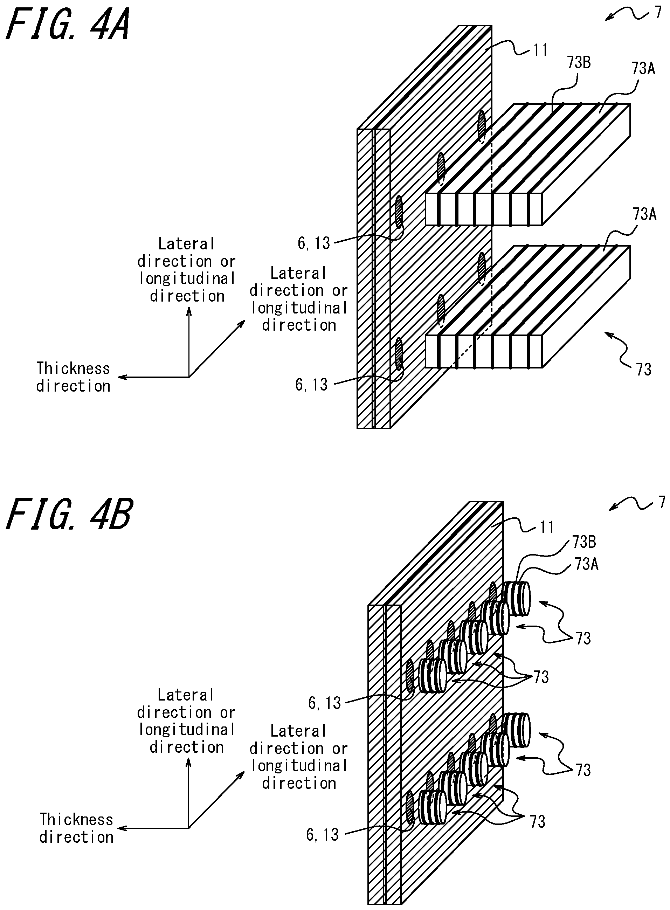

The shape and installation of such electromagnets can be seen, for example, in FIGS. 4A and 4B. In FIG. 4A, a plurality of rectangular-shaped electromagnets 73 are spaced at a predetermined distance from nugget-equivalent surfaces 13 and extend to cover these nugget-equivalent surfaces. This setup allows an external force to be applied uniformly to a plurality of nuggets, thus achieving uniform vibration of the plurality of nuggets. Of course, a single large electromagnet 73 that can cover all nugget-equivalent surfaces 13 may be arranged. If there is only one nugget-equivalent surface 13, it suffices for a single electromagnet 73 to be arranged for that surface 13. As seen from FIG. 4A, each electromagnet 73 has a magnet 73A and a coil 73B wound around it. The axial direction of the coil 73B is preferably aligned with the thickness direction of the steel sheets. In this case, depending on the direction of the current flowing in the coil 73B, the magnetic pole surface 73A1 facing the steel sheet becomes N-pole as illustrated in FIG. 5A, or S-pole as illustrated in FIG. 5B.

In FIG. 4B, a plurality of cylindrical electromagnets 73 are arranged in such a way that their bottom pole surfaces are spaced apart and facing the corresponding nugget-equivalent surfaces 13. This setup allows an external force to be applied uniformly to the plurality of nuggets, thus achieving uniform vibration of the plurality of nuggets. Of course, a single large electromagnet 73 that can cover all nugget-equivalent surfaces 13 may be arranged. If there is only one nugget-equivalent surface 13, it suffices for a single electromagnet 73 to be arranged for that surface 13. As seen from FIG. 4B, each electromagnet 73 has a cylindrical magnet 73A and a coil 73B wound around it. The axial direction of the coil is preferably aligned with the thickness direction of the steel sheets. In this case, depending on the direction of the current flowing in the coil, the magnetic pole surface 73A1 facing the steel sheet becomes N-pole as illustrated in FIG. 5A, or S-pole as illustrated in FIG. 5B.

In FIGS. 5A and 5B, the nugget in the steel sheets is subjected to an external force when a current is applied to the electromagnets 73. Preferably, the current applied to the electromagnets 73 is either a pulsed direct current or a continuous alternating current. When a pulsed direct current is applied to the electromagnets 73, the steel sheets are caused to vibrate due to the intermittent external force exerted onto the nugget-equivalent surfaces 13 and 23. When a continuous alternating current is applied to the electromagnets, each time the direction of the current changes, each magnetic pole surface 73A1 facing the steel sheet S switches between the N and S poles, yet an external force is always exerted onto the nugget in the steel sheets. In the case of alternating current, the magnitude of the external force exerted onto the steel sheets varies with changes in the current value over time, causing the steel sheets to vibrate.

It is sufficient for the electromagnets 73 to be installed to face one surface of the steel sheets, yet the electromagnets may be installed so as to face both the front and back surfaces of the steel sheets. However, in such cases, it is preferable to shift the position of the electromagnets on one side and the other side with respect to the thickness direction of the steel sheets so that the electromagnets do not face each other and cancel out the external forces.

The vibration detector 74 illustrated in FIG. 3 may be a laser displacement meter or laser Doppler vibrometer positioned at a predetermined distance from a nugget-equivalent surface 23, and is capable of measuring the frequency and amplitude of the steel sheets. In FIG. 3, by placing the vibration detector 74 at a position facing the electromagnet 73 across the steel sheets, the frequency and maximum amplitude of the steel sheets can be measured with the vibration detector 74. The frequency and maximum amplitude detected by the vibration detector 74 are output to the controller 71. The controller 71 receives the frequency and maximum amplitude values output from the vibration detector 74, compares them with the set values, performs operations such as PID operations on the deviations to determine the frequency (frequency of the pulsed direct current or continuous alternating current) and current value for the electromagnets 73 such that the steel sheets are caused to vibrate at a predetermined frequency and maximum amplitude, as well as the current value to be provided to the amplifier 72 in consideration of the amplification rate of the amplifier 72, and provides command values to the power supply 75. The power supply 75 is a power supply for passing current through the coils of the electromagnets 73. The power supply 75 receives the command values input from the controller 71 and provides a current at a predetermined frequency and current value to the amplifier 72. The amplifier 72 amplifies the current values provided by the power supply 75 at an appropriate amplification rate and provides the command values to the electromagnets 73. In this way, a current at the predetermined frequency and current value flows through the electromagnets 73, enabling the nugget in the steel sheets to vibrate at the predetermined frequency and maximum amplitude.

As long as vibration is applied to the nugget in the steel sheets under the aforementioned predetermined conditions, the method of installation of the vibration application device 7 is not limited. The vibration application device 7 may be used in combination with the vibration application device 8 described below. From the viewpoint of efficiently applying vibration to the nugget, it is preferable to install the vibration application device 7 so that the direction of vibration application is perpendicular to the nugget-equivalent surfaces 13 and 23 as tangent planes, as illustrated in FIG. 3. In consideration of the fact that hydrogen tends to remain particularly in the nugget, it is preferable to install the vibration application device 7 so that it provides vibration at a predetermined frequency and maximum amplitude over the entire nugget-equivalent surfaces 13 and 23, as illustrated in FIG. 5. Alternatively, the vibration application device 7 may be installed so that the vibration propagated in the steel sheets reaches the nugget even if the electromagnets 73 are not facing the nugget-equivalent surfaces. Whether a given vibration reaches the nugget can be checked using the vibration detector 74 described above, which is placed at a position facing the nugget-equivalent surface.

From the viewpoint of efficiently applying the predetermined vibration to the nugget in the steel sheets, the shortest linear distance between the surface of the steel sheets on the side facing the electromagnet 73 and the magnetic pole surface 73A1 is preferably within 15 m, and more preferably within 5 m.

### Contact-type vibration application device 8

With reference to FIG. 6, the vibration application device 8 includes a controller 81, a vibration element 82, and a vibration detectors 83. The vibration application device 8 has the vibration element 82 configured to contact a surface of the steel sheets, and the vibration application device 8 is configured to cause the steel sheets to be vibrated by the vibration element 82.

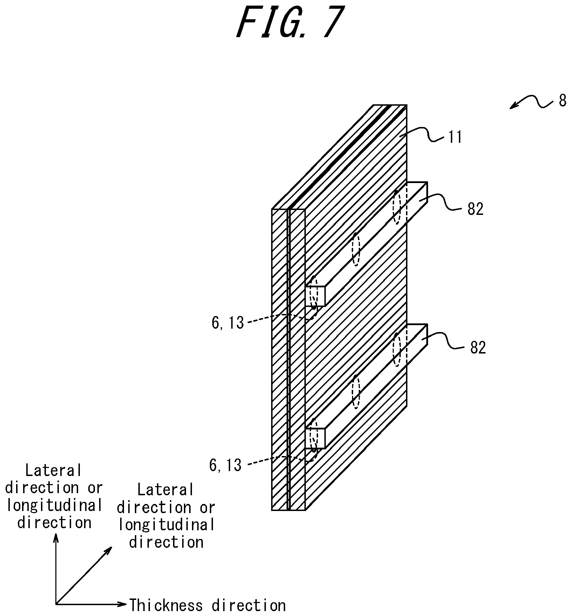

The vibration element 82 may be any general piezoelectric element without limitation on its shape and installation. However, for example, as illustrated in FIGS. 6 and 7, each vibration element 82 may be a planer vibration element that is brought into surface contact with the steel sheets so as to contact part or preferably all of the corresponding nugget-equivalent surface 13, thereby well vibrating the nugget 3 in the steel sheets.

It is sufficient for each vibration element 82 to be provided so as to contact one surface of the steel sheets, yet the vibration elements 82 may be installed so as to contact both the front and back surfaces of the steel sheets. Alternatively, a stopper (not illustrated) may be provided on the back surface to receive the vibration caused by the vibration elements 82. In the case of installing the vibration elements 82 so as to contact both the front and back surfaces, however, it is preferable to shift the position of the vibration elements on one side and the other side with respect to the thickness direction of the steel sheets so that the vibration elements do not face each other and cancel out the vibration.

The vibration detector 83 illustrated in FIG. 6 may be a laser displacement meter or laser Doppler vibrometer positioned at a predetermined distance from the nugget-equivalent surface 23 of the steel sheets, and is capable of measuring the frequency and amplitude of the steel sheets. In FIG. 6, by placing the vibration detector 83 at the position facing the vibration element 82 across the steel sheets, the frequency and maximum amplitude of the steel sheets can be measured with the vibration detector 83. The frequency and maximum amplitude detected by the vibration detector 83 are output to the controller 81. The controller 81 receives the frequency and maximum amplitude values output from the vibration detector 83, compares them with the set values, performs operations such as PID operations on the deviations to determine the frequency and current value of a pulsed direct current to flow through the vibration element 82 such that the steel sheets are caused to vibrate at a predetermined frequency and maximum amplitude, and controls the power supply (not illustrated) to provide a pulsed direct current at a predetermined frequency and current value to the vibration element 82. In this way, the vibration element 82 is caused to vibrate at the predetermined frequency and amplitude, enabling the steel sheets to vibrate at the predetermined frequency and maximum amplitude.

In FIG. 7, a plurality of rectangular-shaped vibration elements 82 are spaced at a predetermined distance from a plurality of nugget-equivalent surfaces 13 and extend to cover these nugget-equivalent surfaces. This setup allows an external force to be applied uniformly to a plurality of nuggets, thus achieving uniform vibration of the plurality of nuggets. Of course, a single large vibration element 82 that can cover all nugget-equivalent surfaces 13 may be arranged. The vibration elements 82 may be arranged one for each nugget-equivalent surface 13. If there is only one nugget-equivalent surface 13, it suffices for a single vibration element 82 to be arranged for that surface 13.

As long as vibration is applied to the steel sheets under the aforementioned predetermined conditions, the method of installation of the vibration application device 8 is not limited. The vibration application device 8 may be used in combination with the vibration application device 7 described above. From the viewpoint of efficiently applying vibration to the nugget, it is preferable to install the vibration application device 8 so that the direction of vibration application is perpendicular to the nugget-equivalent surfaces 13 and 23 as tangent planes, as illustrated in FIG. 6. In consideration of the fact that hydrogen tends to remain particularly in the nugget, it is preferable to install the vibration application device 8 so that the vibration elements 82 are in contact with at least part, more preferably all, of the nugget-equivalent surfaces 13 and 23, as illustrated in FIG. 7. Alternatively, the vibration application device 8 may be installed so that the vibration propagated in the steel sheets reaches the nugget even if the vibration elements 82 are not in direct contact with the nugget-equivalent surfaces. Whether a given vibration reaches the nugget can be checked using the vibration detector 83 described above, which is placed at a position facing the nugget-equivalent surface.

In the present disclosure, residual hydrogen in the nugget can be reduced without heat treatment. Therefore, according to the present disclosure, it is possible to obtain a welded joint that exhibits excellent delayed fracture resistance while avoiding the risk that the chemical composition and/or microstructure of the steel sheet is changed from a desired state due to heat, compared to the conventional technique of performing heat treatment after welding. Further, the present disclosure does not require a heating device for coping with hydrogen embrittlement, which is advantageous in terms of working time and working cost. Therefore, the present disclosure, which employs a simple method, can be used particularly advantageously, for example, in resistance spot welding in automobile manufacturing that requires many detailed welding operations.

### EXAMPLES

Two steel sheets of longitudinal direction: 150 mm × lateral direction: 50 mm × sheet thickness: 1.4 mm were overlapped, one was used as a lower steel sheet 1 placed vertically downward and the other as an upper steel sheet 2 placed vertically above the lower steel sheet 1. Table 1 lists the tensile strength of the lower steel sheet 1 and the upper steel sheet 2, and the presence or absence of a coating on the surface and the overlapping surface of the steel sheet, which was either without coating (CR) or with coating (hot-dip galvanizing (GI), galvannealing (GA), coating weight was 50 g/m² per side).

The tensile strength was obtained by preparing a JIS No. 5 tensile test piece from each steel sheet along the direction perpendicular to the rolling direction and performing a tensile test in accordance with the provisions of JIS Z 2241 (2011).

As illustrated in FIGS. 1 and 2, a sheet combination of two overlapped steel sheets 1 and 2 was sandwiched between a pair of welding electrodes (lower electrode 4 and upper electrode 5), and a welded joint was obtained by joining the steel sheets under the joining (current) conditions listed in Table 1. A resistance spot welding point 6 schematically represents a welding trace formed on the surface of the steel sheet (welded joint) by the joining.

The process described above was performed with the welding electrodes 4 and 5 always water-cooled and the steel sheet at room temperature (20 °C).

Both of the lower electrode 4 and the upper electrode 5 were chromium-copper DR-type electrodes having a diameter at the tip (tip diameter) of 6 mm and a curvature radius of 40 mm. The electrode force applied during the joining was controlled by driving the lower electrode 4 and the upper electrode 5 with a servomotor, and a single-phase alternating current with a frequency of 50 Hz was supplied.

Thus, resistance spot welding points 6 were observed on the surfaces 11 and 21 of the lower steel sheet 1 and the upper steel sheet 2 after joining, as illustrated in FIG. 2. Further, a nugget 3, which is schematically illustrated in FIG. 1, was formed on the overlapping surfaces 12 and 22 of the lower steel sheet 1 and the upper steel sheet 2 along the thickness direction from the resistance spot welding point 6. Two welded joints were prepared under each set of current conditions to measure the amount of residual hydrogen in the nugget before and after vibration application, respectively.

After the steel sheets were joined by current as described above and after the "time from start of current passage to start of vibration application" listed in Table 1 was passed, vibration was applied to the nugget in one of the welded joints obtained under each set of current conditions from one of the surfaces of the steel sheets under the vibration application conditions listed in Table 1. The vibration was applied either by the contact method (see FIG. 6), in which one ceramic vibration element was pressed against one of the nugget-equivalent surfaces, or by the non-contact method (see FIG. 3), in which one electromagnet having a magnetic pole surface spaced 50 mm away from and facing one of the nugget-equivalent surfaces (on the side facing the electromagnet) was used. The frequency and maximum amplitude of the vibration applied to the steel sheets were measured with a vibration detector arranged to face the other nugget-equivalent surface.

The obtained welded joint was allowed to stand in the atmosphere at normal temperature (20 °C) for 24 hours, and whether or not delayed fracture occurred after the standing was visually judged. Further, when peeling and cracking of the nugget were not visually observed in the surface, a cross section in the thickness direction including the center of the nugget was observed with an optical microscopy (× 50 times) to confirm the presence or absence of cracks in the cross section. When peeling of the nugget (a phenomenon in which the nugget separates into two at the joining interface) was observed, it was evaluated as ×; when cracks were visually observed in the surface, it was evaluated as V; when the cross section in the thickness direction including the center of the nugget was observed and cracks not reaching the surface were observed in the cross section, it was evaluated as Δ; and when no cracks were confirmed in the cross section, it was evaluated as O. The results are listed in Table 1. The welded joint was judged to have excellent delayed fracture resistance when no cracks were observed in the cross section (O) and when cracks not reaching the surface were observed in the cross section (Δ).

The amount of residual hydrogen in the nugget was measured by thermal desorption analysis. Regarding the amount of residual hydrogen before vibration application, a welded joint that had not been applied with vibration was selected from the welded joints obtained under each set of current conditions, and a sample was obtained from the welded joint by cutting it into 1 cm × 1 cm × sheet thickness so that the resistance spot welding point was included in the center. After degreasing with ethanol, thermal desorption analysis was performed. Regarding the amount of residual hydrogen after vibration application, a welded joint that had been applied with vibration was selected from the above welded joints, and a sample was obtained from the welded joint by cutting it into 1 cm × 1 cm × sheet thickness so that the resistance spot welding point was included in the center. After degreasing with ethanol, thermal desorption analysis was performed. The sample was heated at a heating rate of 200 °C/hour, and the amount of hydrogen released from the sample was quantified by gas chromatography every 5 minutes to determine the hydrogen release rate (wt/min) at each temperature. The amount of hydrogen released was obtained by calculation by accumulating the obtained hydrogen release rates. Then, the value of part per million obtained by dividing the integrated value of the amount of hydrogen released up to 210 °C by the mass of the sample was defined as the amount (wt.ppm) of residual hydrogen in the nugget in mass fraction, and it is also listed in Table 1.

### [Table 1]

**Table 1**

| No. | Steel sheet | | | | Joining (current passage) conditions | | | Vibration application conditions | | | | | Evaluation | | | | Classification |
|---|---|---|---|---|---|---|---|---|---|---|---|---|---|---|---|---|---|
| | Upper steel sheet | | Lower steel sheet | | Current (kA) | Current passage time (ms) | Electrode force (kN) | Vibration application method | Time from start of current passage to start of vibration application (min) | Frequency (Hz) | Maximum amplitude (nm)* | Vibration application time (sec) | Delayed fracture resistance of welded joint | Amount of residual hydrogen in nugget before vibration application (wtppm) | Amount of residual hydrogen in nugget after vibration application (wtppm) | Percentage of hydrogen reduction (%) | |
| | Tensile strength (MPa) | Coating | Tensile strength (MPa) | Coating | | | | | | | | | | | | | |
| 1 | 1480 | CR | 1480 | CR | 5 | 200 | 5 | contact method | 5 | 100 | 80 | 10 | ○ | 1.12 | 0.42 | 63 | Example |
| 2 | 1480 | CR | 1480 | CR | 5 | 200 | 5 | contact method | 5 | 1000 | 105 | 10 | ○ | 1.14 | 0.22 | 81 | Example |
| 3 | 1480 | CR | 1480 | CR | 5 | 200 | 5 | contact method | 5 | 100000 | 108 | 10 | ○ | 1.08 | 0.35 | 68 | Example |
| 4 | 1480 | CR | 1480 | CR | 5 | 200 | 5 | contact method | 5 | 120000 | 105 | 10 | Δ | 1.07 | 0.48 | 55 | Example |
| 5 | 1480 | CR | 1480 | CR | 5 | 200 | 5 | contact method | 5 | 80 | 103 | 10 | ∇ | 1.11 | 0.57 | 49 | Comparative example |
| 6 | 1480 | CR | 1480 | CR | 5 | 200 | 5 | contact method | 30 | 1000 | 98 | 10 | ○ | 1.14 | 0.18 | 84 | Example |
| 7 | 1480 | CR | 1480 | CR | 5 | 200 | 5 | contact method | 120 | 1000 | 122 | 10 | ○ | 1.15 | 0.17 | 85 | Example |
| 8 | 1480 | CR | 1480 | CR | 5 | 200 | 5 | contact method | 5 | 1000 | 131 | 3 | ○ | 1.13 | 0.31 | 73 | Example |
| 9 | 1480 | CR | 1480 | CR | 5 | 200 | 5 | contact method | 5 | 1000 | 125 | 1 | ○ | 1.11 | 0.48 | 57 | Example |
| 10 | 1480 | CR | 1480 | CR | 5 | 200 | 5 | contact method | 5 | 1000 | 123 | 0.3 | ○ | 1.11 | 0.50 | 55 | Example |
| 11 | 1480 | CR | 1480 | CR | 5 | 200 | 5 | contact method | 5 | 1000 | 112 | 20 | ○ | 1.12 | 0.12 | 89 | Example |
| 12 | 1480 | CR | 1480 | CR | 5 | 200 | 5 | contact method | 5 | 1000 | 532 | 10 | ○ | 1.07 | 0.23 | 79 | Example |
| 13 | 1480 | CR | 1480 | CR | 5 | 200 | 5 | contact method | 5 | 1000 | 2340 | 10 | ○ | 1.20 | 0.25 | 79 | Example |
| 14 | 1480 | CR | 1480 | CR | 5 | 200 | 5 | contact method | 5 | 1000 | 32 k | 10 | ○ | 1.16 | 0.27 | 77 | Example |
| 15 | 1480 | CR | 1480 | CR | 5 | 200 | 5 | contact method | 5 | 1000 | 495 k | 10 | ○ | 1.14 | 0.37 | 68 | Example |
| 16 | 1480 | CR | 1480 | CR | 5 | 200 | 5 | contact method | 5 | 1000 | 584 k | 10 | ∇ | 1.13 | 0.56 | 50 | Comparative example |
| 17 | 1480 | CR | 1480 | CR | 5 | 200 | 5 | non-contact method | 5 | 1000 | 132 | 10 | ○ | 1.11 | 0.21 | 81 | Example |
| 18 | 1480 | CR | 1480 | CR | 5 | 200 | 5 | non-contact method | 5 | 10000 | 128 | 10 | ○ | 1.08 | 0.28 | 74 | Example |
| Underlined if outside the scope of the present disclosure. | | | | | | | | | | | | | | | | | |
| CR: no coating treatment | | | | | | | | | | | | | | | | | |
| GI: hot-dip galvanizing | | | | | | | | | | | | | | | | | |
| GA: galvannealing | | | | | | | | | | | | | | | | | |
| * "k" indicates 1,000 times (kilo). | | | | | | | | | | | | | | | | | |

| No. | Steel sheet | | | | Joining (current passage) conditions | | | Vibration application conditions | | | | | Evaluation | | | | Classification |
|---|---|---|---|---|---|---|---|---|---|---|---|---|---|---|---|---|---|
| | Upper steel sheet | | Lower steel sheet | | Current (kA) | Current passage time (ms) | Electrode force (kN) | Vibration application method | Time from start of current passage to start of vibration application (min) | Frequency (Hz) | Maximum amplitude (nm)* | Vibration application time (see) | Delayed fracture resistance of welded joint | Amount of residual hydrogen in nugget before vibration application (wtppm) | Amount of residual hydrogen in nugget after vibration application (wtppm) | Percentage of hydrogen reduction (%) | |
| | Tensile strength (MPa) | Coating | Tensile strength (MPa) | Coating | | | | | | | | | | | | | |
| 19 | 1480 | GI | 1480 | GI | 5 | 200 | 5 | contact method | 5 | 1000 | 128 | 10 | ○ | 1.14 | 0.23 | 80 | Example |
| 20 | 1480 | GI | 1480 | GI | 5 | 200 | 5 | contact method | 5 | 10000 | 132 | 10 | ○ | 1.12 | 0.32 | 71 | Example |
| 21 | 1480 | GI | 1480 | GI | 5 | 200 | 5 | non-contact method | 5 | 1000 | 142 | 10 | ○ | 1.14 | 0.26 | 77 | Example |
| 22 | 1480 | GI | 1480 | GI | 5 | 200 | 5 | non-contact method | 5 | 10000 | 133 | 10 | ○ | 1.17 | 0.30 | 74 | Example |
| 23 | 1480 | GA | 1480 | GA | 5 | 200 | 5 | contact method | 5 | 1000 | 142 | 10 | ○ | 1.16 | 0.23 | 80 | Example |
| 24 | 1480 | GA | 1480 | GA | 5 | 200 | 5 | contact method | 5 | 10000 | 135 | 10 | ○ | 1.15 | 0.30 | 74 | Example |
| 25 | 1480 | GA | 1480 | GA | 5 | 200 | 5 | non-contact method | 5 | 1000 | 125 | 10 | ○ | 1.14 | 0.24 | 79 | Example |
| 26 | 1480 | GA | 1480 | GA | 5 | 200 | 5 | non-contact method | 5 | 10000 | 143 | 10 | ○ | 1.17 | 0.33 | 72 | Example |
| 27 | 1480 | CR | 1480 | CR | 5 | 200 | 5 | - | - | - | - | - | × | 1.17 | - | . | Comparative example |
| 28 | 980 | CR | 980 | CR | 5 | 200 | 5 | contact method | 5 | 1000 | 121 | 10 | ○ | 0.65 | 0.11 | 83 | Example |
| 29 | 1180 | CR | 1180 | CR | 5 | 200 | 5 | contact method | 5 | 1000 | 132 | 10 | ○ | 0.87 | 0.16 | 82 | Example |
| 30 | 1480 | CR | 1480 | GA | 5 | 200 | 5 | contact method | 350 | 1000 | 100 | 10 | ○ | 1.11 | 0.41 | 63 | Example |
| 31 | 1480 | CR | 1480 | GA | 5 | 200 | 5 | contact method | 370 | 1000 | 100 | 10 | Δ | 1.11 | 0.49 | 56 | Example |
| 32 | 780 | CR | 590 | GI | 5 | 200 | 5 | contact method | 5 | 1000 | 150 | 20 | ○ | 0.59 | 0.09 | 85 | Example |
| 33 | 590 | CR | 590 | GI | 5 | 200 | 5 | contact method | 5 | 1000 | 150 | 20 | ○ | 0.39 | 0.08 | 79 | Example |
| 34 | 1180 | CR | 1180 | CR | 5 | 200 | 5 | contact method | 150 | 2000 | 10 | 30 | ○ | 0.95 | 0.19 | 80 | Example |
| 35 | 1180 | CR | 1180 | CR | 5 | 200 | 5 | contact method | 150 | 2000 | 5 | 30 | ∇ | 0.93 | 0.55 | 41 | Comparative example |

| | | | | | | | | | | | | | | | | | |
|---|---|---|---|---|---|---|---|---|---|---|---|---|---|---|---|---|---|
| Underlined if outside the scope of the present disclosure. CR: no coating treatment GI: hot-dip galvanizing GA: galvannealing * "k" indicates 1,000 times (kilo). | | | | | | | | | | | | | | | | | |

According to Table 1, it is understood that the amount of residual hydrogen in the nugget was sufficiently reduced in all of the welded joints that had been subjected to vibration application under the predetermined conditions, and as a result, delayed fracture was not confirmed, and good delayed fracture resistance was obtained. Good delayed fracture resistance was achieved even in high strength steel sheets that were likely to have delayed fracture with conventional techniques. In contrast, in those welded joints in comparative examples for which no vibration application was performed or the conditions of vibration application were outside the predetermined ranges, the amount of residual hydrogen in the nugget was large, the percentage of hydrogen reduction was low, delayed fracture occurred, and delayed fracture caused by residual hydrogen in the nugget could not be suppressed.

### INDUSTRIAL APPLICABILITY

According to the resistance spot welding method of the present disclosure, it is possible to satisfactorily avoid the problem of delayed fracture after joining steel sheets. According to the method of manufacturing a welded joint of the present disclosure, it is possible to easily obtain a welded joint that exhibits excellent delayed fracture resistance. Therefore, the present disclosure can be suitably used in the manufacturing process of automotive parts for automobiles and the like and in the assembly process of automotive bodies.

### REFERENCE SIGNS LIST

- 1: steel sheet (lower steel sheet)
- 11: surface
- 12: overlapping surface of steel sheet
- 13: nugget-equivalent surface
- 2: steel sheet (upper steel sheet)
- 21: surface
- 22: overlapping surface of steel sheet
- 23: nugget-equivalent surface
- 3: nugget
- 4: welding electrode (lower electrode)
- 5: welding electrode (upper electrode)
- 6: resistance spot welding point (welding trace)
- 7: vibration application device (non-contact-type)
- 71: controller
- 72: amplifier
- 73: electromagnet
- 73A: magnet
- 73A1: magnetic pole surface
- 73B: coil
- 74: vibration detector
- 75: power supply
- 8: vibration application device (contact-type)
- 81: controller
- 82: vibration element
- 83: vibration detector

## Claims

1. A resistance spot welding method comprising:
sandwiching two or more overlapped steel sheets between a pair of welding electrodes,
applying current to the steel sheets while pressing the steel sheets,
forming a nugget on overlapping surfaces of the steel sheets to join the steel sheets, and
after the joining, applying vibration directly or indirectly to the nugget so that the steel sheets are caused to vibrate at a frequency of 100 Hz or more and a maximum amplitude of 10 nm to 500 µm.

2. The resistance spot welding method according to claim 1, wherein time from the start of the applying of the current to the start of the applying of the vibration is 360 minutes or less.

3. The resistance spot welding method according to claim 1 or 2, wherein time for the applying of the vibration is 1 second or longer.

4. The resistance spot welding method according to any one of claims 1 to 3, wherein at least one of the steel sheets has a tensile strength of 780 MPa or more.

5. The resistance spot welding method according to any one of claims 1 to 4, wherein at least one of the steel sheets has a coating on at least one of a surface or the overlapping surface thereof.

6. The resistance spot welding method according to claim 5, wherein the coating is a hot-dip galvanized coating or a galvannealed coating.

7. The resistance spot welding method according to any one of claim 1 to 6, wherein the applying of the vibration is performed by causing the steel sheets to vibrate in response to an external force exerted by an electromagnet onto the steel sheets, the electromagnet having a magnetic pole surface spaced from and facing a surface of at least one of the steel sheets.

8. The resistance spot welding method according to any one of claims 1 to 6, wherein the applying of the vibration is performed by causing the steel sheets to be vibrated by a vibration element configured to contact at least one of the steel sheets.

9. A method of manufacturing a welded joint, the method comprising:
sandwiching two or more overlapped steel sheets between a pair of welding electrodes,
applying current to the steel sheets while pressing the steel sheets,
forming a nugget on overlapping surfaces of the steel sheets to obtain a welded joint in which the steel sheets are joined, and
after the joining, applying vibration directly or indirectly to the nugget so that the steel sheets are caused to vibrate at a frequency of 100 Hz or more and a maximum amplitude of 10 nm to 500 µm.

10. The method of manufacturing a welded joint according to claim 9, wherein time from the start of the applying of the current to the start of the applying of the vibration is 360 minutes or less.

11. The method of manufacturing a welded joint according to claim 9 or 10, wherein time for the applying of the vibration is 1 second or longer.

12. The method of manufacturing a welded joint according to any one of claims 9 to 11, wherein at least one of the steel sheets has a tensile strength of 780 MPa or more.

13. The method of manufacturing a welded joint according to any one of claims 9 to 12, wherein at least one of the steel sheets has a coating on at least one of a surface or the overlapping surface thereof.

14. The method of manufacturing a welded joint according to claim 13, wherein the coating is a hot-dip galvanized coating or a galvannealed coating.

15. The method of manufacturing a welded joint according to any one of claims 9 to 14, wherein the applying of the vibration is performed by causing the steel sheets to vibrate in response to an external force exerted by an electromagnet onto the steel sheets, the electromagnet having a magnetic pole surface spaced from and facing a surface of at least one of the steel sheets.

16. The method of manufacturing a welded joint according to any one of claims 9 to 14, wherein the applying of the vibration is performed by causing the steel sheets to be vibrated by a vibration element configured to contact at least one of the steel sheets.
